# EUROPEAN PATENT SPECIFICATION

(11) **EP 3 309 903 B1**
(45) Date of publication and mention of the grant of the patent: **15.01.2020**
(21) Application number: 17191580.4
(22) Date of filing: 18.09.2017
(51) Int. Cl.: H01R 4/30, F16B 41/00, F16B 43/02

(54) **TERMINAL SOCKET STRUCTURE AND POWER APPARATUS HAVING THE SAME**
ANSCHLUSSDOSENSTRUKTUR UND STROMVORRICHTUNG DAMIT
STRUCTURE DE DOUILLE DE BORNE ET APPAREIL DE PUISSANCE LA COMPRENANT

(30) Priority: 12.10.2016 CN 201621115519 U
(43) Date of publication of application: 18.04.2018
(73) Proprietor: Omron Corporation, Kyoto-shi, Kyoto 600-8530 (JP)
(72) Inventor: FU, Hong Yu, Shanghai, 201206 (CN); WEI, Aimei, Shanghai, 201206 (CN)
(74) Representative: Becker Kurig Straus

(56) References cited:
- JP-A- H08 167 434
- JP-A- 2001 085 082
- JP-U- S59 166 368
- US-A1- 2013 309 917
- US-B1- 9 093 761

## Description

### BACKGROUND OF THE INVENTION

### 1. Field of the Invention

The invention relates to the field of power supply, and particularly relates to a terminal socket structure and a power apparatus having the terminal socket structure.

### 2. Description of Related Art

Conventional terminal socket structures can normally be divided into the following types: Type 1, those having screws with a deformed thread; Type 2, those having terminal sockets with an integrally formed plastic cover; and Type 3, those having a terminal cover to avoid detachment.

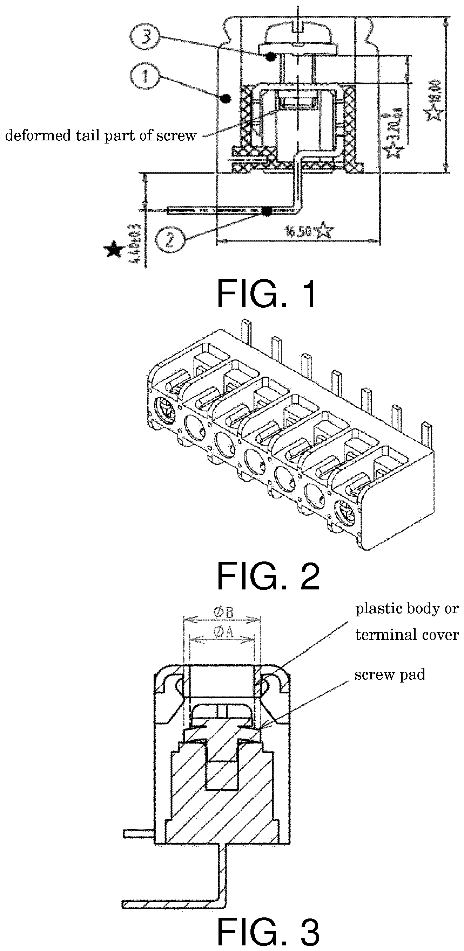

FIG. 1 is a schematic view illustrating a terminal socket structure of Type 1 (shown as ① in FIG. 1). As shown in FIG. 1, through a deformation process at a bottom part of a screw, it is ensured that the screw and a fixing pin are unable to be detached from each other, so as to avoid detachment. However, Type 1 cannot employ O-type terminal wiring.

FIG. 2 is a schematic view illustrating a terminal socket of Type 2 (shown as ② in FIG. 1). As shown in FIG. 2, by integrally forming a plastic cover, the terminal socket body is able to limit a size of the screw to ensure that the screw is unable to be backed out, thereby avoiding detachment. However, there is no directional guidance during wiring of the screw in Type 2, making wiring more difficult. In addition, the cost of the terminal socket is higher.

FIG. 3 is a schematic view illustrating a terminal socket structure of Type 3 (shown as ③ in FIG. 1). As shown in FIG. 3, a size of a screw head is limited by a terminal cover. Since an inner diameter *φ* A of a plastic cover body (or a terminal cover) is less than an outer diameter *φ* B of a screw gasket, the screw is limited and unable to be backed out. However, similar to Type 2, there is no directional guidance during wiring of the screw in Type 3, so wiring is more difficult. Moreover, when wiring with a terminal, the terminal cover needs to be removed before wiring is able to be carried out.

It should be noted that the introduction to the technical background is only provided to more clearly and comprehensively describe the technical solution of the invention and facilitate the understanding of people skilled in the art. The above technical solutions shall not be considered as well-known to people skilled in the art simply because the technical solutions are described in the section of Description of Related Art of the invention.

JP H08 167434 A discloses a terminal device, wherein a guide section used as a fastening mechanism formed out of a fixing plate fixed to phase-to-phase walls 12 and a terminal screw 36 screwed in a screw hole 32, a washer 33 is so supported that a distance interspaced from a terminal plate 13 can be adjusted, and a projection 39 at the tip end of the screw 36 is guided toward the screw hole 14 of the terminal plate. When the wiring of a bare conductor is run, after the bare conductor has been inserted between the plate 13 and the washer 33 with the screw 36 unfastened, and the screw 36 is then fastened. In this case, the bare wire is surely fixed by the washer 33 capable of being rotated. Besides, the wiring of a round crimp terminal is run, the screw 36 is fastened in a state that the hole of the crimp terminal is fitted in the projection 39 of the terminal screw with the terminal screw unfastened. JP H08167434 A is considered to disclose the preamble of independent claim 1.

### SUMMARY OF THE INVENTION

The present invention is provided by appended claim 1. Beneficial embodiments are provided in the dependent claims. In order to resolve the problem of existing terminal block structure, embodiments of the invention provides a terminal socket structure and a power apparatus having the terminal socket structure to prevent a screw from being detached from the terminal socket.

According to a first aspect of an embodiment of the invention, a terminal socket structure is provided. The terminal socket structure includes: a terminal socket body, having at least one screw combining part and a plurality of baffles, wherein the baffles are disposed to at least two sides of the at least one screw combining part; a terminal cover, fitting with the terminal socket body and having a cornice part and a top part, wherein at least one through hole is disposed on the top part, and the at least one through hole corresponds to the at least one screw combining part; at least one screw and at least one screw gasket, wherein the at least one screw is screw-connected to the at least one screw combining part through the at least one screw gasket; and a fixing pin, disposed to a side of the terminal socket body opposite to the screw combining part, wherein: at least one position limiting part is disposed to an outer circumference of the screw gasket, a first rib part is disposed to an inner side of the cornice part of the terminal cover in correspondence with at least one side of each of the at least one screw combining part, and the first rib part is fit with at least one of the at least one position limiting part. A second rib part is disposed to at least one side of the baffle, and the second rib part is fit with at least one of the at least one position limiting part. The at least one screw gasket is in a rectangular shape, the position limiting part is disposed to each of four sides of the at least one screw gasket, the first rib part is disposed to the inner side of the cornice part of the terminal cover in correspondence with each of two sides of each of the at least one screw combining parts, the first rib parts are fit with two of the position limiting parts, the second rib part is disposed to each of two sides of the baffle, and the second rib parts are fit with the other two of the position limiting parts, and wherein the baffle is disposed to each of two opposite sides of the one screw combining part.

According to a second aspect of an embodiment of the invention, a power apparatus is provided. The power apparatus includes the terminal socket structure according to the first aspect.

In the terminal socket structure according to the embodiments of the invention, the terminal socket body and the screw gasket are improved in designs to prevent the screw from being detached and to make wiring more convenient (i.e., having directional guidance). In addition, wiring with the terminal is enabled without the need to remove the terminal cover. Moreover, after removing the terminal cover, the terminal socket structure is equivalent to an ordinary terminal socket, so the different cost considerations of different customers can be coped with.

Specific embodiments of the invention are disclosed in detail with reference to the following descriptions and the accompanying drawings. The descriptions clearly describe examples in which the principle of the invention is applicable. However, it should be understood that the scope of the embodiments of the invention shall not be limited thereto. The embodiments of the invention may cover various modifications, without departing from the scope of the annexed claims.

The description(s) for an embodiment and/or a disclosed feature(s) may be applied in one or more embodiments in an identical or similar way, combined with a feature in another embodiment, or replace a feature in another embodiment.

It should be noted that, throughout the text, terms such as "comprise/include" refer to the presence of a feature, an assembly, a step, or a component, but do not exclude the presence or addition of another feature, another assembly, another step or another component.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view illustrating a terminal socket structure including a screw with a deformed thread.
FIG. 2 is a schematic view illustrating a terminal socket structure with an integrally formed plastic cover.
FIG. 3 is a schematic view illustrating a terminal socket structure with a terminal cover preventing detachment.
FIG. 4 is a schematic view illustrating a terminal socket structure according to an example not forming part of the invention.
FIG. 5 is a schematic view illustrating a terminal cover according to the invention.
FIG. 6 is a schematic view illustrating an example of a terminal socket body not forming part of the invention.
FIG. 7 is a schematic view illustrating a terminal socket body accroding to the invention.
FIG. 8 is a schematic view illustrating yet another example of a terminal socket body not forming part of the invention.
FIG. 9 is a schematic view illustrating a terminal cover corresponding to the terminal socket body of FIG. 8.
FIG. 10 is a schematic view illustrating another example not forming part of the invention of a terminal socket structure.
FIG. 11 is a schematic view illustrating an example of a screw gasket not forming part of the invention.
FIG. 12 is a schematic view illustrating the screw gasket according to the invention.
FIG. 13 is a schematic view illustrating a cross section of a terminal socket structure.
FIG. 14 is a schematic view illustrating an engagement configuration of a terminal socket structure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

A terminal socket structure is provided according to an embodiment of the invention.

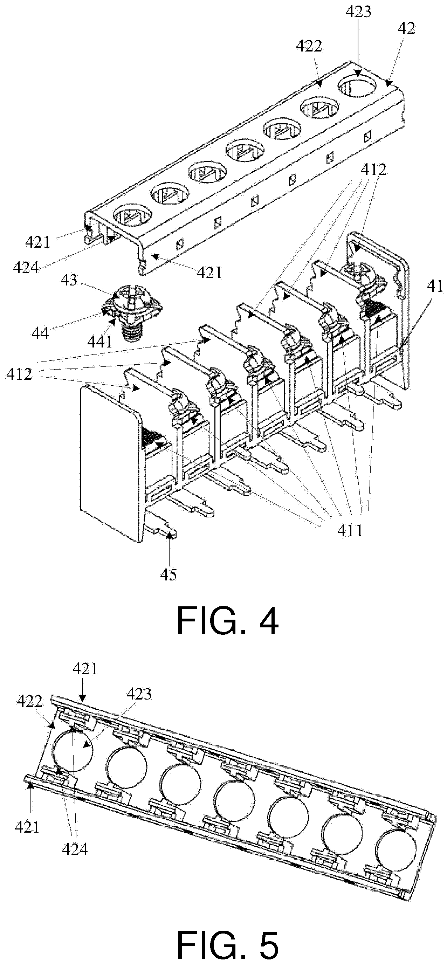

FIG. 4 is a schematic view illustrating the terminal socket structure according to an example not forming part of the invention. As shown in FIG. 4, the terminal socket structure has a terminal socket body 41, a terminal cover 42, at least one screw 43 and at least one screw gasket 44, and a fixing pin 45.

In the example, as shown in FIG. 4, the terminal socket body 41 has at least one screw combining part 411 and a plurality of baffles 412. The baffles 412 are disposed to at least two sides of the at least one screw combining part 411. In the embodiment, namely, the screw combining part 411 is provided to arrange the screw 43. In FIG. 4, the number of the screw combining parts 411 is seven, for example. However, the example is not limited thereto. In actual implementation, the number of the screw combining parts 411 may be more or less than 7. Besides, in FIG. 4, the respective screw combining parts 411 are sequentially arranged in a row. However, the example is not limited thereto. In actual implementation, the screw combining parts 411 may be arranged into one row or a plurality of rows disposed in adjacency.

In the example, as shown in FIG. 4, the terminal cover 42 is fit with the terminal socket body 41 and has a cornice part 421 and a top part 422. At least one through hole 423 is provided on the top part 422, and the at least one through hole 423 corresponds to the at least one screw combining part 411. In other words, the number and location of the through hole 423 correspond to the number and location of the screw combining part 411. By disposing the through hole 423, wiring is able to be carried out with a terminal without the need to remove the terminal cover 42. After the terminal cover 42 is removed, the structure is equivalent to an ordinary fence-type terminal socket. Therefore, different needs of different customers under different cost considerations can be coped with.

In the example, as shown in FIG. 4, the at least one screw 43 is screw-connected to the at least one screw combining part 411 through the at least one screw gasket 44. In other words, the numbers of the screw 43 and the screw gasket 44 also correspond to the number of the screw combining part 411.

In the example, as shown in FIG. 4, the fixing pin 45 is disposed to a side of the terminal socket body 41 opposite to the screw combining part 411. FIG. 4 illustrates an example where an extending direction of the fixing pin 45 is perpendicular to an extending direction of the screw 43. However, the example is not limited thereto. In actual implementation, the extending direction of the fixing pin 45 may also be parallel to the extending direction of the screw 43.

In the example, what differs from a conventional terminal socket structure is that, as shown in FIG. 4, at least one position limiting part 441 is disposed to an outer circumference of the screw gasket 44. Besides, a first rib part 424 is disposed to an inner side of the cornice part 421 of the terminal cover 42 in correspondence with at least one side of each of the screw combining part 411, and the first rib part 424 is fit with at least one of the at least one position limiting part 411.

FIG. 5 is a schematic view illustrating the first rib part 424 disposed on the terminal cover 42. With the structure, by fitting the first rib part 424 disposed on the terminal cover 42 with the position limiting part 441 disposed on the screw gasket 44, the screw is restricted and prevented from being detached. Moreover, wiring also becomes easier (due to directional guidance provided).

In an example, the number of the screw combining part 411 arranged is one, and the baffle 412 is disposed to each of two opposite sides of the screw combining part 411.

In another example, the screw combining parts 411 are configured as a set, and the baffle 412 is disposed to each of two opposite sides of the set of screw combining parts 411, whereas no baffle is disposed between the screw combining parts 411 of the set of screw combining parts 411. Moreover, a cover baffle (not shown) may be disposed between the through holes 423 of the top part 422 of the terminal cover 42 corresponding to the set of screw combining parts 411 to separate the respective screw combining parts 411 of the set of screw combining parts 411. In the example, the set of screw combining parts 411 includes two screw combining parts 411, for example.

In the two examples, a second rib part (not shown) may be further disposed to a side of the baffle 412 corresponding to the screw combining part 411. The second rib part may be fit with at least one of the at least one position limiting part 441 disposed on the screw gasket 44. Hence, by fitting the second rib part disposed on the baffle 412 with the position limiting part 441 disposed on the screw gasket 44, the screw may be further restricted and prevented from being detached, making wiring more convenient.

In yet another example, the screw combining parts 411 are plurality and sequentially arranged in a row, and a baffle 412 is disposed between every two of the screw combining parts 411. Moreover, a baffle 412 is also disposed to a side of the screw combining part 411 adjacent to an edge, where the side is a side adjacent to the edge.

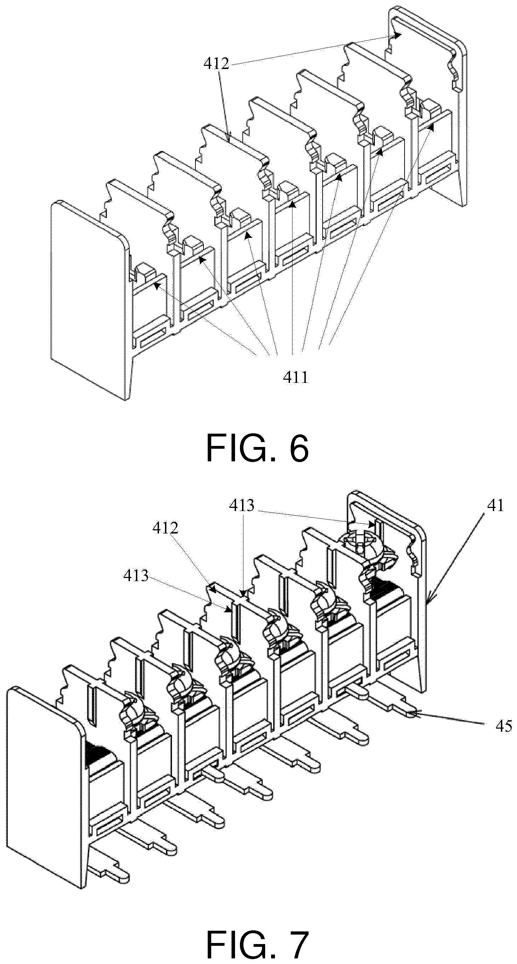

FIG. 6 is a schematic view illustrating an example of the terminal socket body 41 not forming part of the invention. In the example, the number of the screw combining parts 411 of the terminal body 41 is seven, for example. As shown in FIG. 6, in the example, in addition to disposing the baffle 412 between every two of the screw combining parts 411 respectively, the baffle 412 is also disposed to a side of each of the screw combining parts 411 adjacent to two edges, where the side is a side adjacent to the edge. Accordingly, the position of each of the screw combining parts 411 is able to be limited.

FIG. 7 is a schematic view illustrating the terminal socket body 41 of the embodiment. In the exemplary embodiment, the number of the screw combining parts 411 of the terminal body 41 is also seven, for example. As shown in FIG. 7, what differs from the example in FIG. 6 is that, in the example, a second rib part 413 may be further disposed to at least one side of the baffle 412. The second rib part 413 is fit with at least one of the at least one position limiting part 441 disposed on the screw gasket 44. Therefore, by fitting the second rib part 413 disposed on the baffle 412 with the position limiting part 441 disposed on the screw gasket 44, the screw may be further restricted and prevented from being detached, making wiring more convenient.

In yet another example not forming part of the invention, the screw combining parts 411 are arranged into a plurality of sets in series, and the baffle 412 is disposed between every two sets of the plurality of sets of the screw combining parts 411. Moreover, the baffle 412 is also disposed to a side of every set of the screw combining parts 411 adjacent to an edge, where the side is a side adjacent to the edge.

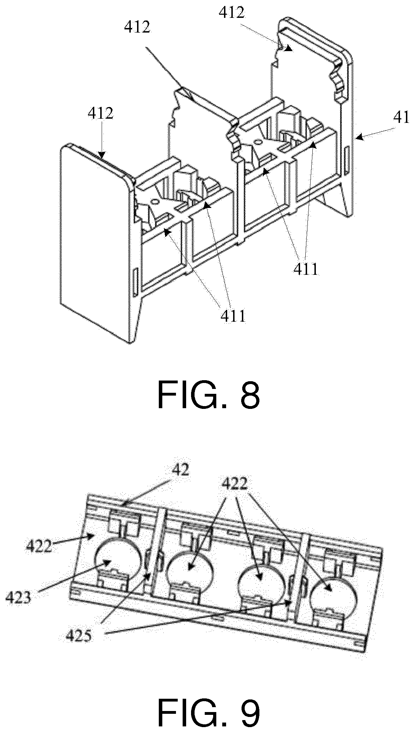

FIG. 8 is a schematic view illustrating an an example not forming part of the invention of the terminal socket body 41 of the embodiment, FIG. 9 is a schematic view illustrating the terminal cover 42 corresponding to the terminal socket body 41. In the example, the terminal socket body 41 has two sets of the screw combining parts 411, and each set of the screw combining parts 411 includes two screw combining parts 411, for example. As shown in FIGs. 8 and 9, the baffle 412 is disposed between the two sets of the screw combining parts 411. In addition, the two sets of the screw combining parts 411 are respectively adjacent to edges. According to FIG. 8, the baffle 412 is disposed to a side of the set of the screw combining parts 411 adjacent to a left edge, where the side is a side adjacent to the left edge, while another baffle 412 is disposed to a side of the screw combining parts 411 adjacent to a right edge, where the side is a side adjacent to the right edge. In the embodiment, as shown in FIG. 9, a cover baffle 425 may be further disposed between the through holes 423 corresponding to each set of the screw combining parts 411, of the top part 422 on the terminal cover 42, in order to separate the respective screw combining parts 411 in each set of the screw combining parts 411.

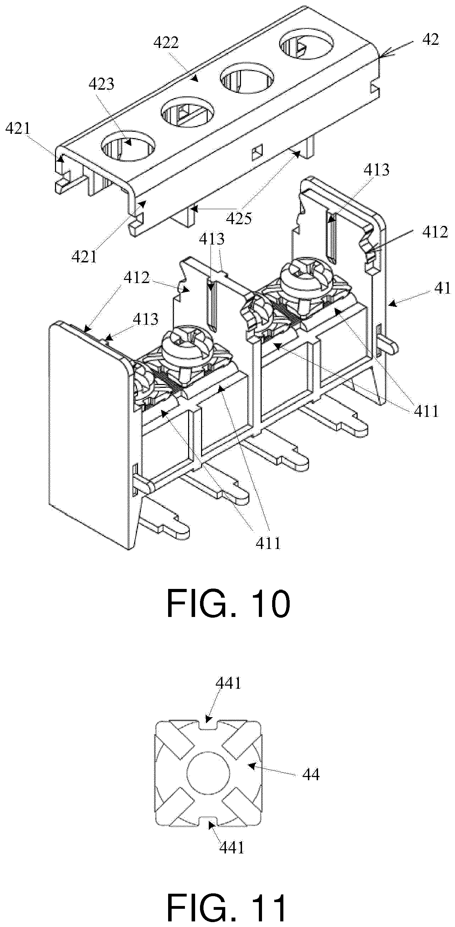

FIG. 10 is a schematic view illustrating another example of the terminal socket body not forming part of the invention. In the example, the terminal socket body 41 similarly has two sets of the screw combining parts 411, each set of the screw combining parts 411 includes two screw combining parts 411, for example. As shown in FIG. 10, what differs from the examples in FIGs. 8 and 9 is that, in the example, the second rib part 413 may be disposed to at least one side of the baffle 412, and the second rib part 413 is fit with at least one of the at least one position limiting part 441 disposed on the screw gasket 44. Therefore, by fitting the second rib part 413 disposed on the baffle 412 with the position limiting part 441 disposed on the screw gasket 44, the screw may be further restricted and prevented from being detached, making wiring more convenient.

In an exemplary example, the screw gasket 44 is in a rectangular shape, and the position limiting part 441 is disposed to each of two opposite sides of the screw gasket 44. FIG. 11 is a schematic view illustrating the screw gasket 44 of the example. In the example, the first rib part 424 is disposed to the inner side of the cornice part 421 of the terminal cover 42 in correspondence with each of two sides of each of the screw combining parts 411, as shown in FIGs. 4 and 5, and the position of the screw 43 is limited by fitting the two first rib parts 424 with the two position limiting parts 441 disposed on the screw gasket 44.

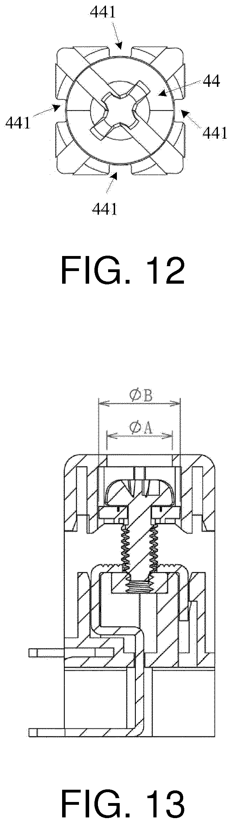

The screw gasket 44 according to the invention is in a rectangular shape, and the position limiting part 441 is disposed to each of four sides of the screw gasket 44. FIG. 12 is a schematic view illustrating an example of a status in which the screw gasket 44 and the screw are assembled. In the embodiment, the first rib part 424 is disposed to the inner side of the cornice part 421 of the terminal cover 42 in correspondence with each of the two sides of each of the screw combining parts 411, as shown in FIGs. 4 and 5, moreover, the second rib part 413 is disposed to each of two sides of the baffle 412, as shown in FIG. 7, the position of the screw 43 is limited by fitting the first rib parts 424 and the second rib parts 413 with the four position limiting parts 441 disposed on the screw gasket 44.

In the embodiment, an inner diameter of the through hole 423 may be less than an outer diameter of the screw gasket 44. FIG. 13 is a cross-sectional view illustrating the terminal socket structure. As shown in FIG. 13, by arranging an inner diameter *ϕ* A of the through hole 423 to be less than an outer diameter *ϕ*B of the screw gasket 44, it is ensured that the screw is not detached from the terminal socket body 41. Meanwhile, it is also ensured that, after the screw 43 is completely backed out, the second rib part 413 disposed on the terminal socket body 41 and/or the first rib part 424 disposed on the terminal cover 42 are able to effectively guide the direction of the screw 43, and an adequate distance is provided so that wiring of the terminal is ensured.

In the embodiment, the terminal cover 42 and the terminal socket body 41 may be combined through engagement.

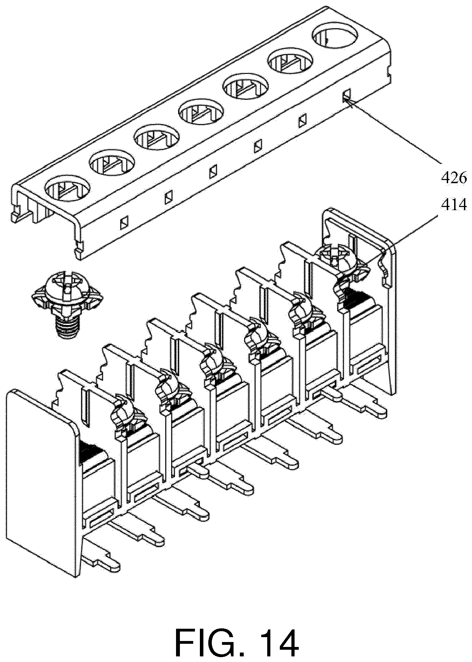

In an embodiment, as shown in FIG. 14, a positioning aperture 426 is disposed to an outer side of the cornice part 421 of the terminal cover 42 at a position corresponding to each of the baffles 412. A protrusion 414 is disposed to at least one end of the baffle 412 corresponding to the positioning aperture 426. By inserting the protrusion 414 into the positioning aperture 426, the terminal cover 42 is engaged with the terminal socket body 41. Accordingly, the components may be assembled or detached based on needs.

In the terminal socket structure according to the embodiments of the invention, the terminal socket body and the screw gasket are designed to prevent the screw from being detached and to make wiring more convenient (i.e., having directional guidance). In addition, wiring with the terminal is enabled without the need to remove the terminal cover. Moreover, after removing the terminal cover, the terminal socket structure is equivalent to an ordinary terminal socket, so the different cost considerations of different customers can be coped with.

The invention also provides a power apparatus. The power apparatus includes the terminal socket structure according to the invention. Since the descriptions about the terminal socket structure have been made in the embodiment according to the invention, said descriptions are incorporated herein and shall thus not be repeated in the following.

In the power apparatus of the embodiment, the terminal socket structure of the embodiment according to the invention is adopted to prevent the screw from being detached, and wiring is thus more convenient.

It will be apparent to those skilled in the art that various modifications and variations can be made to the structure of the present invention without departing from the scope as defined in the appended claims. In view of the foregoing, it is intended that the present invention cover modifications and variations of this invention provided they fall within the scope of the appended claims.

## Claims

1. A terminal socket structure, comprising:
a terminal socket body (41), having at least one screw combining part (411) and a plurality of baffles (412), wherein the baffles are disposed to at least two sides of the at least one screw combining part;
a terminal cover (42), fit with the terminal socket body and having a cornice part (421) and a top part (422), wherein at least one through hole (423) is disposed on the top part, and the at least one through hole corresponds to the at least one screw combining part;
at least one screw (43) and at least one screw gasket (44), wherein the at least one screw is screw-connected to the at least one screw combining part through the at least one screw gasket; and
a fixing pin (45), disposed to a side of the terminal socket body opposite to the screw combining part,
wherein:
at least one position limiting part (441) is disposed to an outer circumference of the screw gasket, a first rib part (424) is disposed to an inner side of the cornice part of the terminal cover in correspondence with at least one side of each of the at least one screw combining part, and the first rib part is fit with at least one of the at least one position limiting part (441),
the terminal socket structure being **characterized in that** a second rib part (413) is disposed to at least one side of the baffle (412), and the second rib part is fit with at least one of the at least one position limiting part (441),
wherein the at least one screw gasket (44) is in a rectangular shape, the position limiting part (441) is disposed to each of four sides of the at least one screw gasket, the first rib part (424) is disposed to the inner side of the cornice part of the terminal cover (42) in correspondence with each of two sides of each of the at least one screw combining parts (411), the first rib parts are fit with two of the position limiting parts, the second rib part (413) is disposed to each of two sides of the baffle (412), and the second rib parts are fit with the other two of the position limiting parts.
and wherein the baffle (412) is disposed to each of two opposite sides of the one screw combining part.

2. The terminal socket structure as claimed in claim 1, wherein an inner diameter of the at least one through hole (423) is less than an outer diameter of the at least one screw gasket (44).

3. The terminal socket structure as claimed in claim 1, wherein the terminal cover (42) is fit with the terminal socket body (41) through engagement.

4. The terminal socket structure as claimed in claim 3, wherein a positioning aperture (426) is disposed to an outer side of the cornice part (421) of the terminal cover (42) at a position corresponding to each of the baffles (412), a protrusion (414) is disposed to at least one end of the baffles corresponding to the positioning aperture, and the terminal cover is engaged with the terminal socket body by inserting the protrusion into the positioning aperture.

5. A power apparatus, comprising the terminal socket structure according to any one of claims 1 to 4.

## Patentansprüche

1. Anschlussbuchsenstruktur, umfassend:
einen Anschlussbuchsenkörper (41), der mindestens ein Schraubenkombinationsteil (411) und eine Vielzahl von Leitblechen (412) aufweist, wobei die Leitbleche an mindestens zwei Seiten des mindestens einen Schraubenkombinationsteils angeordnet sind;
aufweisend eine Anschlussabdeckung (42), passend mit dem Anschlussbuchsenkörper und ein Gesimsteil (421) und ein oberes Teil (422), wobei mindestens ein Durchgangsloch (423) auf dem oberen Teil angeordnet ist und das mindestens eine Durchgangsloch dem mindestens einen Schraubenkombinationsteil entspricht;
mindestens eine Schraube (43) und mindestens eine Schraubendichtung (44), wobei die mindestens eine Schraube mit dem mindestens einen Schraubenkombinationsteil durch die mindestens eine Schraubendichtung schraub-verbunden ist; und
einen Befestigungsstift (45), der auf einer Seite des Anschlussbuchsenkörpers gegenüber dem Schraubenkombinationsteil angeordnet ist,
wobei:
mindestens ein Lagebegrenzungsteil (441) an einem Außenumfang der Schraubendichtung angeordnet ist, ein erstes Rippenteil (424) an einer Innenseite des Gesimsteils der Anschlussabdeckung in Korrespondenz mit mindestens einer Seite jedes des mindestens einen Schraubenkombinationsteils angeordnet ist, und das erste Rippenteil mit mindestens einem des mindestens einen Lagebegrenzungsteils (441) angepasst ist,
wobei die Anschlussbuchsenstruktur **dadurch gekennzeichnet ist, dass** ein zweiter Rippenteil (413) an mindestens einer Seite des Leitblechs (412) angeordnet ist, und der zweite Rippenteil mit mindestens einem des mindestens einen Lagebegrenzungsteils (441) angepasst ist,
wobei die mindestens eine Schraubendichtung (44) in einer rechteckigen Form vorliegt, der Lagebegrenzungsteil (441) zu jeder von vier Seiten der mindestens einen Schraubendichtung angeordnet ist, der erste Rippenteil (424) zur Innenseite des Gesimsteils der Anschlussabdeckung (42) in Korrespondenz mit jeder von zwei Seiten jedes des mindestens einen Schraubenkombinationsteils (411) angeordnet ist, die ersten Rippenteile mit zwei der Lagebegrenzungsteile angepasst sind, das zweite Rippenteil (413) an jeder von zwei Seiten des Leitblechs (412) angeordnet ist, und die zweiten Rippenteile mit den anderen zwei der Lagebegrenzungsteile angepasst sind, und wobei das Leitblech (412) an jede von zwei der gegenüberliegenden Seiten des einen Schraubenkombinationsteils angeordnet ist.

2. Anschlussbuchsenstruktur gemäß Anspruch 1, wobei ein Innendurchmesser des mindestens einen Durchgangslochs (423) kleiner ist, als ein Außendurchmesser der mindestens einen Schraubendichtung (44).

3. Anschlussbuchsenstruktur gemäß Anspruch 1, wobei die Anschlussabdeckung (42) durch Eingriff mit dem Anschlussbuchsenkörper (41) angepasst ist.

4. Anschlussbuchsenstruktur gemäß Anspruch 3, wobei eine Positionierungsöffnung (426) an einer Außenseite des Gesimsteils (421) der Anschlussabdeckung (42) an einer Position entsprechend zu jedem der Leitbleche (412) angeordnet ist, ein Vorsprung (414) an mindestens einem Ende der Leitbleche entsprechend der Positionierungsöffnung angeordnet ist und die Anschlussabdeckung mit dem Anschlussbuchsenkörper durch Einsetzen des Vorsprungs in die Positionierungsöffnung in Eingriff steht.

5. Energieversorgungsvorrichtung, umfassend die Anschlussbuchsenstruktur gemäß irgendeinem der Ansprüche 1 bis 4.

## Revendications

1. Structure de douille de borne comprenant :
un corps de douille de borne (41) ayant au moins une partie de combinaison de vis (411) et une pluralité de déflecteurs (412) dans laquelle les déflecteurs sont disposés sur au moins deux côtés de l'au moins une partie de combinaison ;
un couvercle de borne (42) inséré avec le corps de douille de borne et ayant une partie de corniche (421) et une partie supérieure (422), dans laquelle au moins un trou traversant (423) est disposé sur la partie supérieure, et l'au moins un trou traversant correspond à l'au moins une partie de combinaison de vis ;
au moins une vis (43) et au moins un joint de vis (44), dans laquelle l'au moins une vis est reliée par vis à l'au moins une partie de combinaison de vis par l'au moins un joint de vis ; et
une broche de fixation (45) disposée sur un côté du corps de douille de borne opposé à la partie de combinaison de vis,
dans laquelle :
au moins une partie de limitation de position (441) est disposée sur une circonférence extérieure du joint de vis, une première partie de nervure (424) est disposée sur un côté intérieur de la partie de corniche du couvercle de borne en correspondance avec au moins un côté de chacune de l'au moins une partie de combinaison de vis et la première partie de nervure est insérée avec au moins une de l'au moins une partie de limitation de position (441),
la structure de douille de borne étant **caractérisée en ce qu'**une seconde partie de nervure (413) est disposée sur au moins un côté du déflecteur (412), et la seconde partie de nervure est insérée avec l'au moins une de la partie de limitation de position (441),
dans laquelle l'au moins un joint de vis (44) est de forme rectangulaire, la partie de limitation de position (441) est disposée sur chacun des quatre côtés de l'au moins un joint de vis, la première partie de nervure (424) est disposée sur le côté intérieur de la partie de corniche du couvercle de borne (42) en correspondance avec chacun des deux côtés des au moins une parties de combinaison de vis (411), les premières parties de vis sont insérées avec deux des parties de limitation de position, la seconde partie de nervure (413) est disposée sur chacun des deux côtés du déflecteur (412) et les secondes parties de nervure sont insérées avec les deux autres des parties de limitation de position,
et dans laquelle
le déflecteur (412) est disposé sur chacun des deux côtés opposés de l'une partie de combinaison de vis.

2. Structure de douille de borne selon la revendication 1, dans laquelle un diamètre intérieur de l'au moins un trou traversant (423) est inférieur à un diamètre extérieur de l'au moins un joint de vis (44).

3. Structure de douille de borne selon la revendication 1, dans laquelle le couvercle de borne (42) est inséré avec le corps de douille de borne (41) par engagement.

4. Structure de douille de borne selon la revendication 3, dans laquelle une ouverture de positionnement (426) est disposée sur un côté extérieur de la partie de corniche (421) du couvercle de borne (42) à une position correspondant à chacun des déflecteurs (412), une saillie (414) est disposée sur au moins une extrémité des déflecteurs correspondant à l'ouverture de positionnement, et le couvercle de borne est engagé avec le corps de douille de borne par insertion de la saillie dans l'ouverture de positionnement.

5. Appareil de puissance comprenant la structure de douille de borne selon l'une quelconque des revendications 1 à 4.
